# EUROPÄISCHE PATENTSCHRIFT

(11) **EP 1 631 042 B1**
(45) Veröffentlichungstag und Bekanntmachung des Hinweises auf die Patenterteilung: **28.11.2007**
(21) Anmeldenummer: 05016048.0
(22) Anmeldetag: 23.07.2005
(51) Int. Cl.: H04L 29/12

(54) **Verfahren zum Zuweisen einer Geräteadresse an eine Nebenstation in einem Netzwerk sowie eine derartige Nebenstation und Hauptstation für das Netzwerk**
Method for allocating a device address to a substation in a network as well as such substation and main station for said network
Méthode pour attribuer une adresse à une station secondaire dans un réseau, ainsi que la station secondaire et la station principale pour le réseau

(30) Priorität: 24.08.2004 DE 102004041092
(43) Veröffentlichungstag der Anmeldung: 01.03.2006
(73) Patentinhaber: Bosch Rexroth AG, 70184 Stuttgart (DE)
(72) Erfinder: Kynast, Rigobert, 97816 Lohr am Main (DE); Leurs, Ludwig, 97816 Lohr am Main (DE); Schmid, Thomas, 97840 Hafenlohr (DE); Schultze, Stephan, 97816 Lohr am Main (DE)

(56) Entgegenhaltungen:
- US-B1- 6 345 294
- US-B1- 6 581 107

## Beschreibung

Die Erfindung betrifft ein Verfahren zum Zuweisen einer Geräteadresse an eine Nebenstation in einem Netzwerk durch eine Hauptstation. Die Erfindung betrifft weiterhin eine Nebenstation und eine Hauptstation für ein Netzwerk, wie beispielsweise ein Feldbusnetzwerk in der Automatisierungstechnik.

Üblicherweise weisen in einem Netzwerk vorhandene Nebenstationen festgelegte eindeutige Geräteadressen auf, über die die jeweilige Nebenstation eindeutig adressierbar ist. Die Geräteadressen werden allgemein als MAC-Adressen bezeichnet und sind in der Hardware der Nebenstation fest einprogrammiert. In einer Initialisierungsphase des Netzwerks werden die Geräteadressen der einzelnen Nebenstationen an die Hauptstation kommuniziert, so dass die Hauptstation die einzelnen Nebenstationen des Netzwerks gezielt ansprechen kann. Weiterhin werden in der Initialisierungsphase IP-Adressen den Nebenstationen in dem Netzwerk zugeordnet, die entweder manuell festgelegt werden oder per DHCP vergeben werden.

Üblicherweise muss jedoch die IP-Adresse ermittelt und eingegeben werden bzw. die IP-Adresse muss nach der Initialisierungsphase jeder Nebenstation zugeordnet werden, wenn die Nebenstation von einem Benutzer gezielt angesprochen werden soll. Dies hat den Nachteil, dass der Benutzer ohne die Zuordnungsinformation in der Hauptstation einzusehen, die IP-Adresse bzw. die Geräteadresse der Nebenstation in dem Netzwerk nicht kennt und somit eine gezielte Adressierung nicht vornehmen kann.

Für die Echtzeitkommunikation wird üblicherweise jeder der Nebenstationen in dem Netzwerk eine Kommunikationsadresse zugewiesen, über die das Gerät direkt in einem Echtzeitkanal adressierbar ist.

Aus der US 6,581,107 ist ein Verfahren zum Verteilen von Computeradressen an weitere Einheiten bekannt. Dabei wird zunächst von einer Nebenstelle ein Anforderungstelegramm an eine Hauptstelle übermittelt und daraufhin ein Antworttelegramm von der Hauptstelle an die Nebenstelle gesendet wird, wobei dieses Antworttelegramm die gleiche Struktur aufweist wie das von der Nebenstelle an die Hauptstelle gesendete Telegramm.

Aus der US 6,345,294 B1 sind Verfahren und Vorrichtungen zur Konfiguration von Geräten in einer Netzwerkumgebung bekannt.

Es ist Aufgabe der vorliegenden Erfindung, ein Verfahren zum Zuweisen einer Geräteadresse von einer Hauptstation an eine Nebenstation vorzusehen.

Es ist weiterhin Aufgabe der vorliegenden Erfindung, eine Nebenstation für ein Netzwerk zur Verfügung zu stellen, dessen Geräteadresse automatisch zugewiesen wird.

Diese Aufgabe wird durch das Verfahren zum Zuweisen einer Geräteadresse nach Anspruch 1, die Nebenstation für ein Netzwerk nach Anspruch 4 sowie durch die Hauptstation nach Anspruch 7 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Zuweisen einer Geräteadresse an eine Nebenstation in einem Netzwerk vorgesehen. Die Nebenstation im Netzwerk ist über eine Punkt-zu-Punkt-Verbindung angeschlossen. Das Verfahren umfasst die Schritte des Sendens eines Initialisierungstelegramms von einer Hauptstation an die Nebenstation, wobei das Initialisierungstelegramm einen Teil einer Geräteadresse aufweist, des Feststellens einer eingestellten Kommunikationsadresse der Nebenstation für die Echtzeitkommunikation, des Generierens der vollständigen Geräteadressen mithilfe des empfangenen Teils der Geräteadresse und mithilfe der Kommunikationsadresse und des Sendens des Antworttelegramms, das die Kommunikationsadresse und/oder die Geräteadresse enthält, von der Nebenstation an die Hauptstation.

Ziel des erfindungsgemäßen Verfahrens ist es, der Nebenstation eine Geräteadresse zuzuweisen, und die Geräteadresse sowohl in der Nebenstation als auch in der Hauptstation bekannt zu machen. Grundsätzlich ist die Geräteadresse in einem vorbestimmten Bereich frei einstellbar, sie wird jedoch so eingestellt, dass ein Benutzer in Kenntnis des Teils der Geräteadresse und in Kenntnis der einstellbaren Kommunikationsadresse die Geräteadresse ermitteln kann. So umfasst beispielsweise die Geräteadresse mehrere Byte, von denen ein Teil dem Benutzer bekannt ist. Des Weiteren kann die Kommunikationsadresse für die Echtzeitkommunikation beispielsweise manuell an der Nebenstation eingestellt werden, so dass der Teil der Geräteadresse, der dem Benutzer bekannt ist, und die ebenfalls bekannte Kommunikationsadresse gemeinsam die vollständige Geräteadresse der Nebenstation bilden. Auf diese Weise entfällt die Notwendigkeit für einen Benutzer, zunächst auf die Hauptstation zuzugreifen, in der sich eine Zuordnungsliste der physikalischen Nebenstationen zu den Geräteadressen befindet, um die für eine bestimmte Nebenstation passende Geräteadresse herauszufinden.

Insbesondere im Zusammenhang mit dem Ethernet-Netzwerkstandard (Protokoll, Netzwerktopologie und -hardware) sind geschaltete Netzwerke (Switched Ethernet) und Netzwerke mit Verstärkern (Repeater) bekannt; ein Netzwerk mit Switched Ethernet-Technologie wird auch als geschaltetes Netzwerk bezeichnet. Die Erfindung kann für alle Arten von solchen Netzwerken, also für geschaltete und/oder nicht geschaltete, mit Repeatern aufgebaute Netzwerke, auch mit dem Ethernet-Standard, verwendet werden.

Gemäß einer weiteren Ausführungsform der Erfindung kann das Initialisierungstelegramm weiterhin einen Teil einer IP-Adresse aufweisen. Die vollständige IP-Adresse der Nebenstation wird mithilfe des empfangenen Teils der IP-Adresse und mithilfe der Kommunikationsadresse generiert. Das Antworttelegramm, das die Kommunikationsadresse und/oder die vollständige IP-Adresse enthält, wird von der Nebenstation an die Hauptstation gesendet. Somit kann die vollständige IP-Adresse aus dem Teil der IP-Adresse und der eingestellten Kommunikationsadresse entweder in der Hauptstation oder in der Nebenstation generiert werden. Wesentlich ist, dass nach Abschluss des erfindungsgemäßen Verfahrens die IP-Adresse sowohl in der Hauptstation als auch in der Nebenstation vorliegt, so dass eine IP-Kommunikation einem IP-Kommunikationskanal stattfinden kann.

Alternativ kann das Generieren der vollständigen IP-Adresse der Nebenstation mithilfe eines vorgegebenen Teils einer IP-Adresse und mithilfe der gesendeten Kommunikationsadresse in der Hauptstation generiert werden, wonach ein Bestätigungstelegramm von der Hauptstation an das Gerät gesendet wird, das die vollständige IP-Adresse als Antwort auf das Empfangen des Antworttelegramms enthält.

Gemäß einem weiteren Aspekt der vorliegenden Erfindung ist eine Nebenstation für ein Netzwerk vorgesehen. Die Nebenstation weist eine Empfangseinheit zum Empfangen eines Initialisierungstelegramms von einer Hauptstation auf. Mithilfe einer Gerätenummerbereitstellungseinheit wird eine Kommunikationsadresse der Nebenstation bereitgestellt. Ferner ist eine Steuereinheit vorgesehen, um aus dem Initialisierungstelegramm einen Teil einer Geräteadresse zu ermitteln und um die vollständige Geräteadresse abhängig von dem empfangenen Teil der Geräteadresse und abhängig von der Kommunikationsadresse zu generieren. Mithilfe einer Sendeeinheit wird ein Antworttelegramm, das die Geräteadresse und/oder die Kommunikationsadresse enthält, gesendet. Auf diese Weise kann eine Nebenstation für ein Netzwerk zur Verfügung gestellt werden, das mithilfe einer eingestellten bzw. einstellbaren Kommunikationsadresse die Geräteadresse festlegt. Das Generieren der Geräteadresse erfolgt innerhalb der Nebenstation und wird anschließend mithilfe der Sendeeinheit in dem Antworttelegramm an die Hauptstation gesendet.

Gemäß einer weiteren Ausführungsform der Erfindung kann die Steuereinheit aus dem Initialisierungstelegramm weiterhin einen Teil einer IP-Adresse ermitteln und die vollständige IP-Adresse mithilfe des empfangenen Teils der IP-Adresse und mithilfe der Kommunikationsadresse generieren. Die Sendeeinheit ist so ausgestaltet, um das Antworttelegramm, das die Kommunikationsadresse und/oder die vollständige IP-Adresse enthält, zu senden, abhängig davon, ob die Nebenstation die vollständige IP-Adresse oder die Hauptstation die vollständige IP-Adresse generieren soll. Im Falle, dass das Antworttelegramm lediglich die Kommunikationsadresse enthält, kann die Empfangseinheit ausgestaltet sein, um ein Bestätigungstelegramm mit der vollständigen IP-Adresse als Antwort auf das gesendete Antworttelegramm zu empfangen.

Gemäß einem weiteren Aspekt der vorliegenden Erfindung ist eine Hauptstation für ein Netzwerk mit einer Steuereinheit zum Bereitstellen eines Teils einer Geräteadresse vorgesehen. Ferner umfasst die Hauptstation eine Sendeeinheit zum Senden eines Initialisierungstelegramms, wobei das Initialisierungstelegramm den Teil der Geräteadresse enthält. Es ist ferner eine Empfangseinheit vorgesehen, um ein Antworttelegramm zu empfangen, das eine Kommunikationsadresse und/oder eine vollständige Geräteadresse enthält.

Gemäß einer weiteren Ausführungsform der Erfindung kann die Steuereinheit die Sendeeinheit ansteuern, um das Initialisierungstelegramm mit einem Teil einer IP-Adresse zu versehen. Die Empfangseinheit ist ferner so gestaltet, um ein Bestätigungstelegramm mit der vollständigen IP-Adresse als Antwort auf das Empfangen des Antworttelegramms zu empfangen.

Bevorzugte Ausführungsformen der Erfindung werden nachfolgend anhand der beigefügten Zeichnungen näher erläutert. Es zeigen:
Fig. 1 eine mögliche Netzwerktopologie eines Netzwerks,
Fig. 2 ein Blockschaltbild einer Nebenstation für das Netzwerk nach Fig. 1,
Fig. 3 ein Blockschaltbild einer Hauptstation für ein Netzwerk nach Fig. 1,
Fig. 4 ein Flussdiagramm zur Veranschaulichung des erfindungsgemäßen Verfahrens zum automatischen Bereitstellen einer Geräteadresse in einer Nebenstation in einem Netzwerk nach Fig. 1, und
Fig. 5 ein Flussdiagramm zur Veranschaulichung des erfindungsgemäßen Verfahrens zum automatischen Bereitstellen einer Geräteadresse gemäß einer weiteren Ausführungsform.

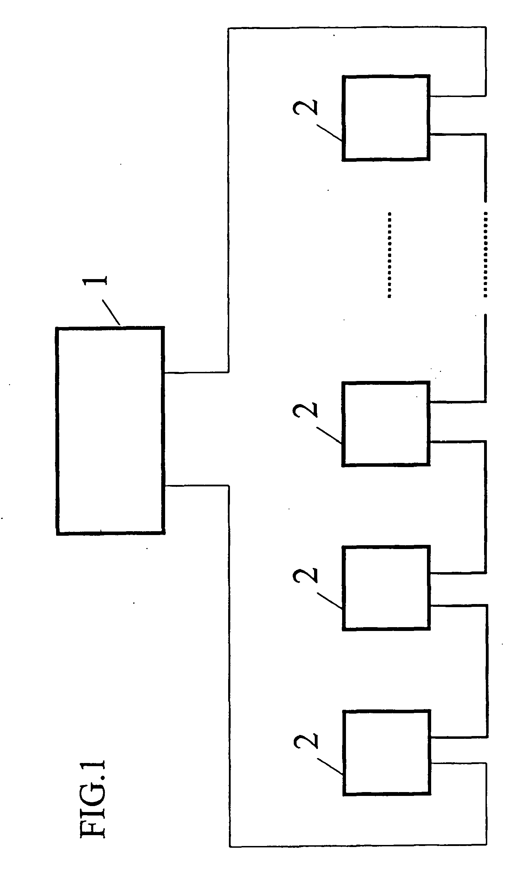

In Fig. 1 ist ein Ringnetzwerk dargestellt, das eine Hauptstation 1 und mehrere Nebenstationen 2 aufweist. Jede Nebenstation 2 weist einen Dateneingang und einen davon getrennten Datenausgang auf, die über einen Zwischenverstärker miteinander verbindbar sind. Auf den Netzwerkverbindungen, mit denen die Netzwerkteilnehmer miteinander verbunden sind, werden zwei Kommunikationskanäle realisiert. In einem ersten Kommunikationskanal, einem Echtzeitkommunikationskanal, sendet die Hauptstation 1 Datenpakete aus, wobei ein erstes Datenpaket Daten für die Nebenstationen 2 enthält, wobei in dem Datenpaket definierte Zeitfenster vorgesehen sind, die jeweils einer der Nebenstationen 2 zugeordnet sind. Die Daten in den definierten Zeitfenstern werden von den Nebenstationen 2 aus dem Datenpaket ausgelesen. Die Hauptstation 1 sendet in dem Echtzeitkommunikationssignal weiterhin ein zweites Datenpaket aus, das ebenfalls Zeitfenster als Platzhalter für Daten aufweist, wobei in das der jeweiligen Nebenstation 2 zugeordnete Zeitfenster die zu sendenden Daten eingefügt werden, und das so veränderte zweite Datenpaket an den nächsten Netzwerkteilnehmer mit den eingefügten Daten weiterleitet. Die letzte Nebenstation 2 leitet dann das zweite Datenpaket wieder an die Hauptstation 1 zurück, wobei das zweite Datenpaket nun mit den von den Nebenstationen 2 zur Hauptstation gesendeten Daten gefüllt ist.

Während eines weiteren Kommunikationskanals, einem IP-Kommunikationskanal, kann jeder der Netzwerkteilnehmer, d.h. die Hauptstation 1 sowie die Nebenstationen 2, ein Datenpaket senden, wenn kein Datenpaket an ihrem jeweiligen Dateneingang anliegt. D.h., sobald das Netzwerk nicht verwendet wird, kann einer der Netzwerkteilnehmer ein Datenpaket senden, um so Daten zu übermitteln. Der Echtzeitkommunikationskanal und der IP-Kommunikationskanal werden durch zwei Zeitbereiche gebildet, in denen jeweils der entsprechende Kommunikationskanal eingenommen wird und die zyklisch aufeinander folgen.

Zur Kommunikation in dem Echtzeitkommunikationskanal wird jeder Nebenstation 2 des Netzwerks eine Kommunikationsadresse zugewiesen. Die Kommunikationsadresse wird an den Nebenstationen 2 jeweils manuell eingestellt oder ist fest vorgegeben. Eine solche Kommunikationsadresse kann beispielsweise eine Zahl zwischen 1 und 254 sein, und kann somit in Form eines Bytes dargestellt werden.

Für den IP-Kommunikationskanal muss jeder der Nebenstationen 2 eine Geräteadresse zugewiesen werden. Die Geräteadresse ist eine so genannte MAC-Adresse (Media Access Control), die mehrere Bytes umfasst. Eine solche Geräteadresse ist bei herkömmlichen IP-Kommunikationsgeräten üblicherweise fest in der Hardware eingestellt und ist eindeutig für jedes auf dem Markt verfügbare IP-Kommunikationsgerät. In dem hier dargestellten Feldbus-Datennetz ist vorgesehen, dass den Nebenstationen 2 eine Geräteadresse zugewiesen werden muss. Soll die Nebenstation 2 in dem IP-Kommunikationskanal auch Daten aussenden können, muss darüber hinaus auch eine IP-Adresse der Nebenstation 2 zugewiesen werden.

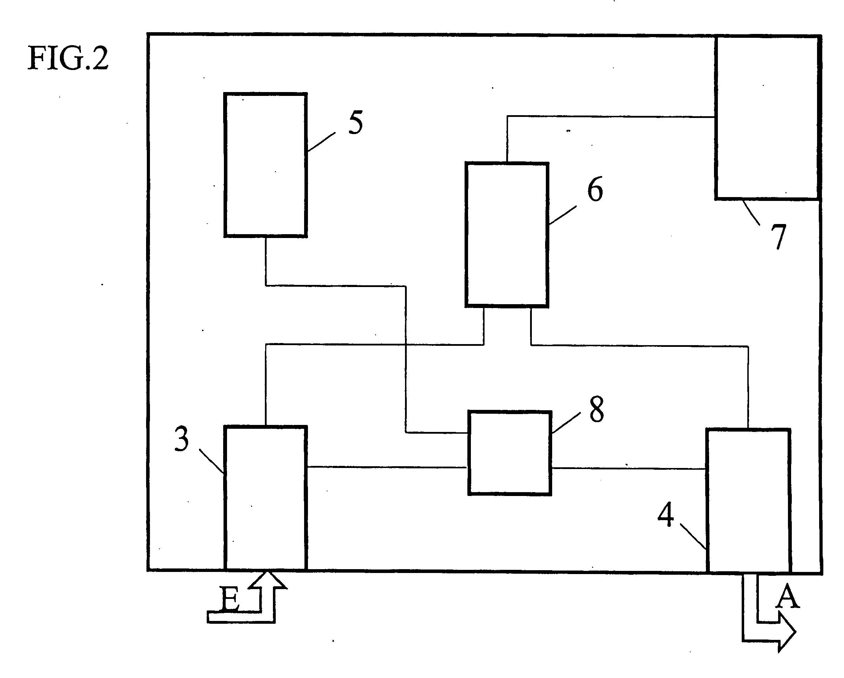

Wie in Figur 2 gezeigt ist, weist eine solche Nebenstation 2 eine Empfangsschaltung 3 auf, die mit einem Dateneingang E verbunden ist und Daten über das Netzwerk empfangen kann. Weiterhin ist eine Sendeeinheit 4 vorgesehen, um Daten über einen Datenausgang A auf das Netzwerk an eine nächste Netzwerkstation zu senden. Die Nebenstation 2 weist ferner eine Steuereinheit 5 auf, um die verschiedenen Kommunikationskanäle zu betreiben. Zwischen der Empfangseinheit 3 und der Sendeeinheit 4 ist ein Zwischenverstärker 8 vorgesehen, der während des IP-Kommunikationskanals Daten an den Dateneingang an den Datenausgang ausgibt.

In dem Echtzeitkommunikationskanal ist der Zwischenverstärker 8 ebenfalls so geschaltet, ein Datenpaket von der Empfangseinheit 3 zur Sendeeinheit 4 weiterzuleiten, ist jedoch auch in der Lage, Daten aus einem entsprechenden Datenpaket zu extrahieren und der Steuereinheit 5 zur Verfügung zu stellen sowie Daten von der Steuereinheit 5 in ein weiterzuleitendes Datenpaket einzufügen. Zum Initialisieren während einer Initialisierungsphase erwartet die Nebenstation 2 den Empfang eines Initialisierungstelegramms, das von der Empfangseinheit 3 an eine Initialisierungseinheit 6 weitergegeben wird. In der Initialisierungseinheit 6 wird aus dem empfangenen Telegramm ein Teil einer Geräteadresse ermittelt und dieser Teil der Geräteadresse und die eingestellte Kommunikationsadresse, die mit einer Kommunikationsadressenbereitstellungseinheit 7 bereitgestellt ist, miteinander verbunden, um eine vollständige Geräteadresse zu bilden. Die vollständige Geräteadresse kann beispielsweise durch die einfache Aneinanderfügung des Teils der Geräteadresse und der Kommunikationsadresse, die manuell eingestellt worden ist, bestimmt werden. Auch andere Arten der Kombination des Teils der Geräteadresse und der Kommunikationsadresse sind denkbar, es ist jedoch von Vorteil, dass ein Benutzer die Kombination nachvollziehen kann, um in Kenntnis der Kommunikationsadresse ohne Weiteres die vollständige Geräteadresse ermitteln zu können.

Die vollständige Geräteadresse wird von der Initialisierungseinheit 6 über die Empfangseinheit 4 an das Netzwerk als Antworttelegramm ausgegeben, so dass die Hauptstation 1 die der betreffenden Nebenstation 2 zugeordnete Geräteadresse bekannt gemacht wird.

Auf gleiche Weise kann in dem Initialisierungstelegramm ein Teil einer IP-Adresse enthalten sein, die in der Initialisierungseinheit 6 mit der Kommunikationsadresse für die Echtzeitkommunikation so verknüpft wird, dass eine vollständige IP-Adresse, die eindeutig ist, gebildet wird. Die vollständige IP-Adresse wird ebenfalls in dem Antworttelegramm über die Empfangseinheit 4 an die Hauptstation 1 ausgegeben, so dass in der Hauptstation 1 eine festgelegte Zuordnung zwischen der vollständigen IP-Adresse und der betreffenden Nebenstation 2 vorliegt.

In einer alternativen Ausführungsform sendet die Initialisierungseinheit 6 die Kommunikationsadresse, die von der Kommunikationsadressenbereitstellungseinheit 7 bereitgestellt wird, direkt über die Empfangseinheit 4 an die Hauptstation 1. In diesem Fall ist es auch nicht notwendig, dass das Initialisierungstelegramm den Teil der Geräteadresse enthält. Sobald die Hauptstation 1 die Kommunikationsadresse erhält, legt die Hauptstation gemäß einer festgelegten Vorgehensweise die vollständige Geräteadresse und die vollständige IP-Adresse gemäß den vorgegebenen Teilen der Geräteadresse und der IP-Adresse und abhängig von der kommunizierten Kommunikationsadresse fest und übermittelt diese in einem Bestätigungstelegramm an die betreffende Nebenstation 2.

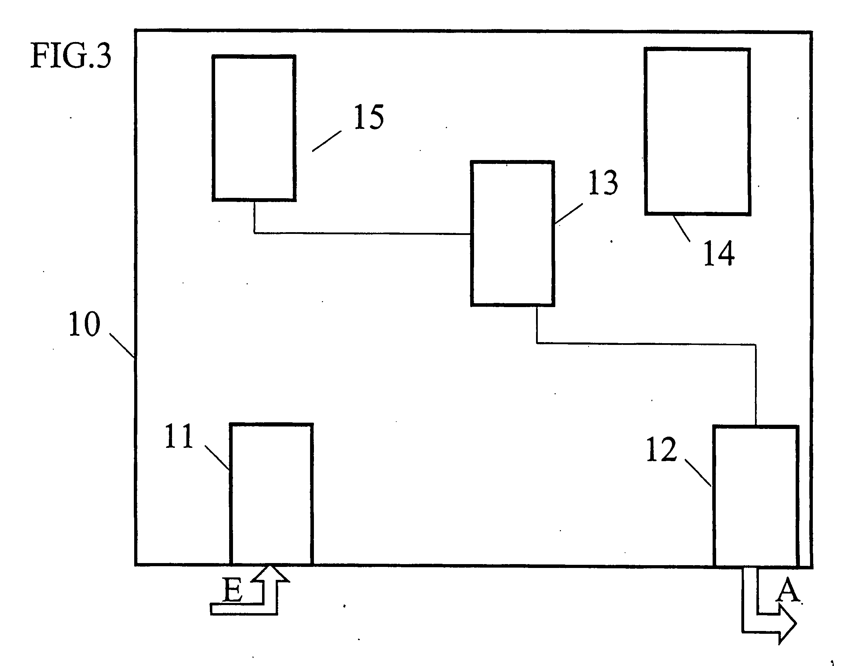

Eine Ausführungsform einer Hauptstation ist in Fig. 3 dargestellt. Die Hauptstation 10 weist eine Empfangseinheit 11 und eine Sendeeinheit 12 auf, die mit den entsprechenden Netzwerkleitungen mit den Nebenstationen 2 verbunden sind. Die Hauptstation 10 weist ebenfalls eine Initialisierungseinheit 13 auf, die gesteuert von einer Steuereinheit 15 ein Initialisierungstelegramm bildet und dieses über die Sendeeinheit 12 ausgibt. Das Initialisierungstelegramm enthält einen Teil einer Geräteadresse, die von einer der Nebenstationen 2 empfangen wird und mithilfe der dort eingestellten Kommunikationsadresse zu einer vollständigen Geräteadresse verarbeitet werden kann.

Als Antworttelegramm empfängt die Hauptstation 10 mit der Empfangseinheit 11 die vollständige Geräteadresse, so dass eine Zuordnung zwischen der vollständigen Geräteadresse und der betreffenden Nebenstation in einem Speicher 14 der Hauptstation erfolgen kann. Auf gleiche Weise kann das Initialisierungstelegramm auch einen Teil einer IP-Adresse enthalten, die in der Nebenstation vervollständigt wird und über das Antworttelegramm an die Hauptstation 10 zurückgesendet wird. Alternativ kann die Hauptstation 10 auch die vollständige Geräteadresse in dem Antworttelegramm empfangen, daraus die vollständige IP-Adresse generieren und ein Bestätigungstelegramm über die Sendeeinheit 12 an die betreffende Nebenstation 2 senden, so dass dort ebenfalls die ihr zugeordnete eindeutige IP-Adresse vorliegt.

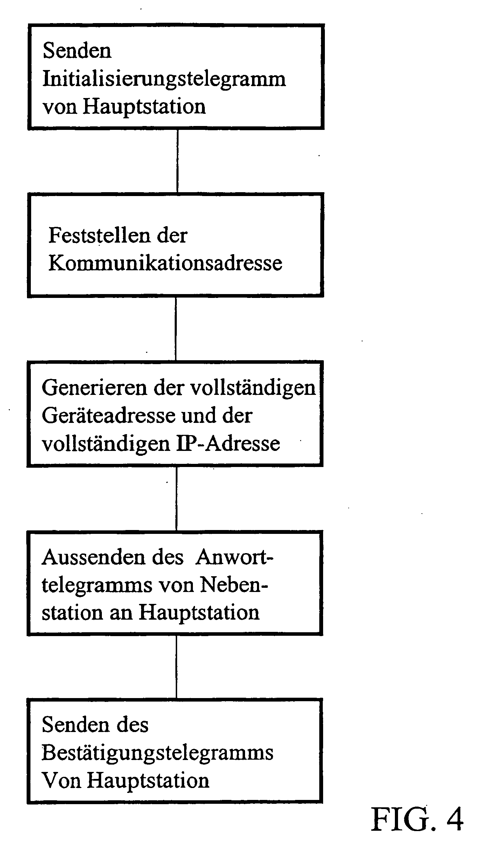

In Fig. 4 ist ein Flussdiagramm zur Veranschaulichung des erfindungsgemäßen Verfahrens dargestellt. Das Verfahren betrifft die Initialisierung und das Zuweisen von Geräte- und IP-Adressen in einem Netzwerk, z.B. in einem Feldbusnetzwerk für die Automatisierungstechnik. Zur Initialisierung sendet die Hauptstation ein Initialisierungstelegramm aus, das einen Teil einer Geräteadresse und/oder einen Teil einer IP-Adresse umfasst, das von einer Nebenstation empfangen wird. Die Nebenstation stellt zunächst die eingestellte Kommunikationsadresse für die Echtzeitkommunikation fest und generiert daraus die vollständige Geräteadresse sowie die vollständige IP-Adresse. Anschließend wird ein Antworttelegramm mit der vollständigen Geräteadresse und der vollständigen IP-Adresse von der Nebenstation an die Hauptstation ausgesendet. Damit liegen die vollständige Geräteadresse und vollständige IP-Adresse sowohl in der Nebenstation als auch in der Hauptstation vor, so dass in der Hauptstation eine Zuordnung zwischen den betreffenden Nebenstationen und der vollständigen Geräteadresse und der vollständigen IP-Adresse besteht.

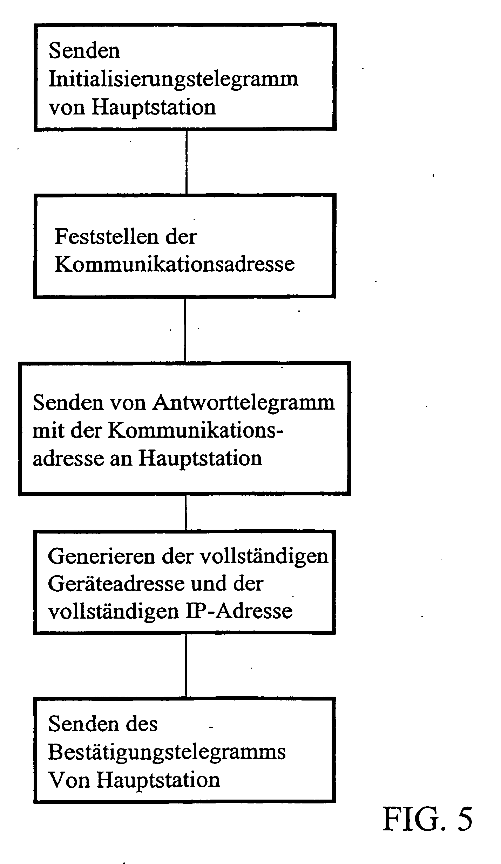

Ein alternatives Verfahren ist in Fig. 5 dargestellt. Dort wird das Initialisierungstelegramm von der Hauptstation gesendet und damit die Nebenstation aufgefordert, die Kommunikationsadresse, die dort eingestellt ist, festzustellen und diese in einem Antworttelegramm an die Hauptstation zu senden. Anschließend wird in der Hauptstation die vollständige Geräteadresse und die vollständige IP-Adresse abhängig von dem dort vorliegenden Teil der Geräteadresse und Teil einer IP-Adresse und abhängig von der übermittelten Kommunikationsadresse generiert und anschließend ein Bestätigungstelegramm mit der vollständigen Geräteadresse und vollständigen IP-Adresse an die betreffende Nebenstation gesendet.

Gemäß einer weiteren Ausführungsform der Erfindung kann anstelle der Kommunikationsadresse auch eine IP-Adresse fest vorgegeben, z.B. manuell eingestellt werden und daraus die Kommunikationsadresse für die Echtzeitkommunikation abgeleitet werden. In diesem Fall entspräche die Kommunikationsadresse einer IP-Adresse und die vollständige IP-Adresse wäre durch die fest vorgegebene IP-Adresse bestimmt.

Wäre beispielsweise als Kommunikationsadresse im Echtzeitkommunikationskanal 5 eingestellt, würden in einem Beispiel die Geräteadresse und die IP-Adresse ebenfalls mit 5 enden, z.B. als IP-Adresse 192.168.0.5. Die ersten drei Byte der IP-Adresse wären somit mit dem Initialisierungstelegramm von der Hauptstation an die Nebenstation gesendet worden, so dass nun 255 verschiedene IP-Adressen vergeben werden können.

Optional ist eine Vereinbarung über einen Time-out der Adressen möglich, so dass auch während des Betriebs einer Nebenstation dessen erlernter Anteil der Adresse veränderlich ist.

Alternativ kann jeder der Nebenstationen 2 des beschriebenen Datennetzwerks mit dem erfindungsgemäßen Initialisierungsverfahren eine Geräteadresse und eine IP-Adresse zugewiesen werden, es kann jedoch auch vorgesehen sein, dass die Geräteadresse und die IP-Adresse fest vorgebbar sind, z.B. mithilfe einer Eingabeeinheit, in die diese Adressen eingegeben werden können.

Sind in dem Datennetz Vereinbarungen über normalerweise reservierte IP-Adressen getroffen worden, so kann weiterhin vorgesehen sein, dass die Nebenstation überprüft, ob die Hauptstation dieselbe IP-Adresse wie sie selber hätte. Erkennt die Nebenstation, dass die Hauptstation dieselbe IP-Adresse hätte, so verwendet die Nebenstation eine neue IP-Adresse, die aus dem reservierten Bereich entnommen wird.

### Bezugszeichenliste

- 1: Hauptstation
- 2: Nebenstation
- 3: Empfangseinheit
- 4: Sendeeinheit
- 5: Steuereinheit
- 6: Initialisierungseinheit
- 7: Kommunikationsadressbereitstellungseinheit
- 8: Zwischenverstärker
- 10: Hauptstation
- 11: Empfangseinheit
- 12 .: Sendeeinheit
- 13: Initialisierungseinheit
- 14: Speicher
- 15: Steuereinheit

## Patentansprüche

1. Verfahren zum Zuweisen einer Geräteadresse an eine Nebenstation (2) in einem Netzwerk, wobei die Nebenstation (2) im Netzwerk über eine Punkt zu Punkt-Verbindung angeschlossen ist; mit folgenden Schritten: Senden eines Telegramms von einer Hauptstation (1, 10) an die Nebenstation (2), wobei das Telegramm einen Teil einer Geräteadresse aufweist;
Feststellen einer eingestellten Kommunikationsadresse der Nebenstation (2);
Generieren der vollständigen Geräteadresse abhängig von dem empfangenen Teil der Geräteadresse und abhängig von der Kommunikationsadresse;
**dadurch gekennzeichnet, dass**
ein Antworttelegramm, das die Kommunikationsadresse und/oder die Geräteadresse enthält, von der Nebenstation an die Hauptstation (1, 10) gesendet wird **und dass es sich** bei dem von der Hauptstation an die Nebenstation gesendeten Telegramm um ein Initialisierungstelegramm handelt.

2. Verfahren nach Anspruch 1, wobei das Initialisierungstelegramm weiterhin einen Teil einer IP-Adresse aufweist; und wobei die vollständige IP-Adresse der Nebenstation (2) mit Hilfe des empfangenen Teil der IP-Adresse und mit Hilfe der Kommunikationsadresse generiert wird; und wobei das Antworttelegramm, das die Kommunikationsadresse und/oder die vollständige IP-Adresse enthält, von der Nebenstation (2) an die Hauptstation (10) gesendet wird.

3. Verfahren nach Anspruch 1, mit den weiteren Schritten: Generieren einer vollständigen IP-Adresse der Nebenstation (2) mit Hilfe eines vorgegebenen Teils einer IP-Adresse und mit Hilfe der gesendeten Kommunikationsadresse in der Hauptstation (10); Senden eines Bestätigungstelegramms mit der vollständigen IP-Adresse als Antwort auf das Empfangen des Antworttelegramms an die Nebenstation (2).

4. Nebenstation (2) für ein Netzwerk;
mit einer Empfangseinheit (3) zum Empfangen eines Initialisierungstelegramms von einer Hauptstation (1, 10), mit einer Kommunikationsadressenbereitstellungseinheit (7) zum Bereitstellen einer Kommunikationsadresse der Nebenstation (2);
mit einer Steuereinheit (4), um aus dem Initialisierungstelegramm einen Teil einer Geräteadresse zu ermitteln und um die vollständige Geräteadresse abhängig von dem empfangenen Teil der Geräteadresse und abhängig von der Kommunikationsadresse zu generieren;
mit einer Sendeeinheit (4), um ein Antworttelegramm, das die Geräteadresse und/oder die Kommunikationsadresse enthält, zu senden.

5. Nebenstation (2) nach Anspruch 4, wobei die Steuereinheit (5) aus dem Initialisierungstelegramm weiterhin einen Teil einer IP-Adresse ermittelt und die vollständige IP-Adresse mit Hilfe des empfangenen Teils der IP-Adresse und mit Hilfe der Kommunikationsadresse generiert wird; und wobei die Sendeeinheit (4) ausgestaltet ist, um das Antworttelegramm, das die Kommunikationsadresse und/oder die vollständige IP-Adresse enthält, zu senden.

6. Nebenstation (2) nach Anspruch 5, wobei die Empfangseinheit weiterhin ausgestaltet ist, um ein Bestätigungstelegramm mit der vollständigen IP-Adresse als Antwort auf das gesendete Antworttelegramm zu empfangen.

7. Hauptstation (10) für ein Netzwerk
mit einer Steuereinheit (15) zum Steuern der Netzwerkkommunikation und eines IP-Kommunikationskanals zum Bereitstellen eines Teils einer Geräteadresse;
mit einer Sendeeinheit (12) zum Senden eines Initialisierungstelegramm, wobei das Initialisierungstelegramm den Teil der Geräteadresse enthält;
mit einer Empfangseinheit (11) zum Empfangen eines Antworttelegramms über den IP-Kommunikationskanal, das eine Kommunikationsadresse und/oder eine vollständige Geräteadresse enthält.

8. Hauptstation (10) nach Anspruch 7, wobei die Steuereinheit die Sendeeinheit (12) ansteuert, um das Initialisierungstelegramm mit einem Teil einer IP-Adresse zu versehen und wobei die Empfangseinheit gestaltet ist, um ein Bestätigungstelegramm mit der vollständigen IP-Adresse als Antwort auf das Empfangen des Antworttelegramms zu empfangen.

## Claims

1. Method for assigning a device address to a slave station (2) in a network, the slave station (2) being connected via a point-to-point connection in the network; comprising the following steps:
transmitting a message from a master station (1, 10) to the slave station (2), the message exhibiting a part of a device address;
determining a set communication address of the slave station (2);
generating the complete device address in dependence on the received part of the device address and in dependence on the communication address;
**characterized in that** a response message which contains the communication address and/or the device address is transmitted by the slave station to the master station (1, 10) and that the message transmitted by the master station to the slave station is an initialization message.

2. Method according to Claim 1, wherein the initialization message also exhibits a part of an IP address; and wherein the complete IP address of the slave station (2) is generated with the aid of the received part of the IP address and with the aid of the communication address; and wherein the response message which contains the communication address and/or the complete IP address is transmitted by the slave station (2) to the master station (10).

3. Method according to Claim 1, comprising the further steps:
generating a complete IP address of the slave station (2) with the aid of a predetermined part of an IP address and with the aid of the transmitted communication address in the master station (10);
transmitting a confirmation message with the complete IP address as response to the reception of the response message to the slave station (2).

4. Slave station (2) for a network;
comprising a receiving unit (3) for receiving an initialization message from a master station (1, 10), with a communication address providing unit (7) for providing a communication address of the slave station (2);
with a control unit (4) for determining a part of a device address from the initialization message and for generating the complete device address in dependence on the received part of the device address and in dependence on the communication address;
with a transmitting unit (4) for transmitting a response message which contains the device address and/or the communication address.

5. Slave station (2) according to Claim 4, wherein the control unit (5) also determines from the initialization message a part of an IP address and the complete IP address is generated with the aid of the received part of the IP address and with the aid of the communication address; and wherein the transmitting unit (4) is arranged for transmitting the response message which contains the communication address and/or the complete IP address.

6. Slave station (2) according to Claim 5, wherein the receiving unit is also arranged for receiving a confirmation message with the complete IP address as response to the transmitted response message.

7. Master station (10) for a network
comprising a control unit (15) for controlling the network communication and an IP communication channel for providing a part of a device address;
with a transmitting unit (12) for transmitting an initialization message, the initialization message containing the part of the device address;
with a receiving unit (11) for receiving a response message via the IP communication channel which contains a communication address and/or a complete device address.

8. Master station (10) according to Claim 7, wherein the control unit drives the transmitting unit (12) for providing the initialization message with a part of an IP address and wherein the receiving unit is arranged for receiving a confirmation message with the complete IP address as response to the reception of the response message.

## Revendications

1. Procédé pour attribuer une adresse d'appareil à une station secondaire (2) dans un réseau, dans lequel la station secondaire (2) est raccordée dans le réseau par une liaison point à point, comportant les étapes suivantes:
- émission d'un télégramme par une station principale (1, 10) à la station secondaire (2), le télégramme comprenant une partie d'une adresse d'appareil ;
- établissement d'une adresse de communication établie de la station secondaire (2) ;
- génération de l'adresse d'appareil complète en fonction de la partie reçue de l'adresse d'appareil et en fonction de l'adresse de communication ;
**caractérisé en ce que**
la station secondaire émet à la station principale (1, 10), un télégramme de réponse qui contient l'adresse de communication et/ou l'adresse d'appareil, le télégramme émis de la station principale à la station secondaire étant un télégramme d'initialisation.

2. Procédé selon la revendication 1,
selon lequel le télégramme d'initialisation comprend en plus une partie d'une adresse IP ; l'adresse IP complète de la station secondaire (2) est produite à l'aide de la partie reçue de l'adresse IP et à l'aide de l'adresse de communication ; et le télégramme de réponse, qui contient l'adresse de communication et/ou l'adresse IP complète, est émis de la station secondaire (2) à la station principale (10).

3. Procédé selon la revendication 1, comportant les étapes supplémentaires:
- production d'une adresse IP complète de la station secondaire (2) à l'aide d'une partie prédéterminée d'une adresse IP et à l'aide de l'adresse de communication émise dans la station principale (10) ;
- émission d'un télégramme de confirmation avec l'adresse IP complète en réponse à la réception du télégramme de réponse à la station secondaire (2).

4. Station secondaire (2) pour un réseau, comportant:
- une unité de réception (3), pour recevoir un télégramme d'initialisation provenant d'une station principale (1, 10),
- une unité de préparation d'une adresse de communication (7) pour préparer une adresse de communication de la station secondaire (2),
- une unité de commande (5), pour déterminer une partie d'une adresse d'appareil à partir du télégramme d'initialisation et pour produire l'adresse d'appareil complète en fonction de la partie reçue de l'adresse d'appareil et en fonction de l'adresse de communication ;
- une unité d'émission (4), pour émettre un télégramme de réponse, qui contient l'adresse d'appareil et/ou l'adresse de communication.

5. Station secondaire (2) selon la revendication 4,
dans laquelle l'unité de commande (5) détermine en outre une partie d'une adresse IP à partir du télégramme d'initialisation et l'adresse IP complète est déterminée à l'aide de la partie reçue de l'adresse IP et à l'aide de l'adresse de communication ; et dans laquelle l'unité d'émission (4) est configurée pour émettre le télégramme de réponse qui contient l'adresse de communication et/ou l'adresse IP complète.

6. Station secondaire (2) selon la revendication 5,
dans laquelle l'unité de réception est en outre configurée pour recevoir un télégramme de confirmation avec l'adresse IP complète en réponse au télégramme de réponse émis.

7. Station principale (10) pour un réseau, comportant:
- une unité de commande (15), pour commander la communication de réseau et un canal de communication IP pour préparer une partie d'une adresse d'appareil ;
- une unité d'émission (12), pour émettre un télégramme d'initialisation, dans laquelle le télégramme d'initialisation contient la partie de l'adresse d'appareil ;
- une unité de réception (11), pour recevoir un télégramme de réponse par le canal de communication IP qui contient une adresse de communication et/ou une adresse d'appareil complète.

8. Station principale (10) selon la revendication 7,
dans laquelle l'unité de commande (15) commande l'unité d'émission (12) pour munir le télégramme d'initialisation d'une partie d'une adresse IP, et l'unité de réception est configurée pour recevoir un télégramme de confirmation avec l'adresse IP complète en réponse à la réception du télégramme de réponse.
